# EUROPEAN PATENT SPECIFICATION

(11) **EP 2 927 663 B1**
(45) Date of publication and mention of the grant of the patent: **05.04.2023**
(21) Application number: 13857824.0
(22) Date of filing: 11.11.2013
(51) Int. Cl.: G01N 1/30, G01N 1/31, G01N 27/447

(54) **AUTOMATIC STAINING METHOD FOR BIOPOLYMERS**
AUTOMATISCHE FÄRBEVERFAHREN FÜR BIOPOLYMERE
PROCÉDÉ DE COLORATION POUR BIOPOLYMÈRES

(30) Priority: 29.11.2012 CN 201210500785
(43) Date of publication of application: 07.10.2015
(73) Proprietor: Nanjing GenScript Biotech Co., Ltd., Nanjing, Jiangsu 211100 (CN)
(72) Inventor: CHEN, Xin, Nanjing Jiangsu 211100 (CN); GUO, Zhenyu, Nanjing Jiangsu 211100 (CN); QIAN, Hong, Nanjing Jiangsu 211100 (CN); REN, Hongfei, Nanjing Jiangsu 211100 (CN); HUA, Rong, Nanjing Jiangsu 211100 (CN); BAI, Tao, Nanjing Jiangsu 211100 (CN)
(74) Representative: Miller Sturt Kenyon
(86) International application number: PCT/CN2013/086826
(87) International publication number: WO 2014/082525

(56) References cited:
- EP-A1- 1 406 089
- WO-A2-2004/104557
- CN-A- 1 609 608
- CN-A- 101 034 043
- CN-A- 101 936 837
- CN-A- 102 607 920
- CN-A- 102 749 369
- CN-B- 101 936 837
- CN-U- 201 917 487
- US-A- 5 559 032
- US-A1- 2010 041 045
- US-A1- 2010 326 828
- US-B1- 6 319 720

## Description

### FIELD OF THE INVENTION

The invention belongs to the field of biotechnology, relates to an automatic staining method for biopolymers.

### BACKGROUND OF THE INVENTION

The technique to separate charged particles by the difference of their migration speeds in an electric field is called electrophoresis. Under certain conditions, the migration distance of a charged particle moving in a uniform electric field within a unit time is a constant, (which is defined as electrophoretic mobility). Charged particles will be separated, as their migration distances are different due to their different charges or mass-to-charge ratios, when they are placed in an electric field for a certain time. The distance between the separated particles is proportional to the voltage of applied electric field and the time of electrophoresis. In 1937, Swedish researcher A. W. K. Tiselius designed the first electrophoresis apparatus for moving boundary electrophoresis, which was used to separate three globulins from horse serum. The work of Tiselius is the beginning of history of electrophoresis. New electrophoretic techniques based on different electrophoretic matrixes, such as filter paper, CM-cellulose, and agar, were continued to be developed from 1940s to early 1950s. In the late 1950s, starch gel electrophoresis and polyacrylamide gel electrophoresis were also developed. Currently, electrophoretic techniques are widely used in the fields of analytical chemistry, biochemistry, clinical chemistry, pharmacology, immunology, microbiology and genetics.

Biopolymers such as peptides, proteins, nucleic acids, oligosaccharides, or complexes thereof are commonly analyzed by gel electrophoresis. Usually samples of interest were loaded in a matrix such as polyacrylamide gel and separated from other components in an electric field, due to the difference of their molecular weights, net charges, sizes and other physical and chemical properties of the molecules, and also to the pore size of the matrix. After electrophoresis, different biopolymers embedded at different locations on the matrix can be further characterized by their interactions with or bindings to one or more binding reagents, such as staining reagents. Numerous methods and reagents have been developed to visualize or detect the biopolymers of interest within a matrix such as gel. These staining reagents can be classified into four classes. The first class of staining reagents includes organic dyes that bind to biopolymers, such as Coomassie Blue dyes that stain proteins and make the protein bands blue, which can be subsequently visualized by naked eyes. The second class of staining reagents includes fluorescent dyes that bind to biopolymers, such as ethidium bromide that stains DNA or RNA and make the stained DNA or RNA bands red when shined with UV light. The third class of staining reagents includes silver staining reagents. The fourth class of staining reagents includes staining reagents that stain the background, which are also called negative staining reagents. The second and third classes of staining reagents were developed to increase the sensitivity over the first class. However, all the staining methods mentioned above are time-consuming.

In order to solve the above-motioned technical problems, we submitted a patent application 201010220009.5, entitled "Rapid Staining Method for Biopolymer" on June 25, 2010, which included the binding of dyes to biopolymers and the separation of free dyes from dye-bound biopolymers, consequently the biopolymer can be distinguished from background. The method was based on the different mobilities of dyes and biopolymers in matrix under applied electric field, which result in rapid binding of dyes and biopolymers, and rapid separation of free dyes from dye-bound biopolymers. The method shortened the whole staining time. However, the method consumed carrier materials, especially disposable filter papers, which significantly increase the staining cost. Moreover, it's inconvenient, as manual operation is required to assemble the sandwich-like structure formed by the matrix containing biopolymer and the filter papers containing different buffers. The exposure to matrix, dyes, and other chemicals is another concern of safety.

### DESCRIPTION OF THE INVENTION

The present invention aims to solve the above-mentioned drawbacks, and to provide an automatic staining method for biopolymer.

The staining apparatus described herein is not part of the present invention.

The purposes of the present invention can be achieved using the following methods:
An automatic staining process can be realized by the following steps:
a, the binding of dye to the biopolymer that need staining: the dye contact with the matrix containing the biopolymer to be stained in the container in an applied electric field, and bind to the biopolymer for staining;
b, excess dye in the matrix is removed by electric force; wherein, the matrix in step a and b is the same one.

Preferably, the automatic biopolymer staining method also includes the following steps: addition of destaining reagent into the container, application of electric field, completely or partially removal of free dye from matrix while biopolymer in the matrix is retained. Furthermore, the method also includes: imaging of dye-bound biopolymer, which can be performed under visible light or invisible light.

In addition, the method also includes: separation and removal of free dye from the dye-bound biopolymer.

The container in the above-mentioned methods has at least one end connected with a pump via tubes. And the pump is connected to containers contains staining and destaining reagents. The pump is used for the addition and removal of dye and destaining reagents. The moving direction of free dye is same or different to that of dye bound to biopolymer. When the directions are same, the moving speeds are different for the unbound dye (free dye or remnant dye) and the biopolymer-bound dye. The unbound dye moves faster. Therefore staining can be achieved even the directions are same. When biopolymer and dye are with different charges, biopolymer is stained due to opposite moving direction of each other in electric field, then excess dye moved out of matrix.

In order to shorten staining time, some relative factors can be optimized according to the practical situation. For instance: if they have the same kind of charge, the biopolymer and dye can be separated at the same starting point by their different migration speeds, which make the dye run out of the matrix while biopolymer still stay in the matrix. If the biopolymer is not pre-stained, the biopolymer should be located on the route of dye moving in order to keep the dye and biopolymer in contact and therefore to allow staining. In addition, the staining time and effect is also affected by pH, ionic strength, matrix material, and so on.

The removal of the unbound dye from the matrix should make dye-bound biopolymer distinguishable from the background, which may still contain some unbound dye.

The above-mentioned invisible light imaging methods include fluorescent imaging, infrared light imaging, ultraviolet light imaging, radioactive imaging and digital imaging techniques. The choice of imaging techniques is dependent on which dye is used.

Preferably, the dye contains one or more of the following types: organic dyes, inorganic dyes, fluorescent dyes, and complex dyes. The destaining solution comprises of 25 mM EDTA and 25 mM NaH₂PO₄ solution. The biopolymers include one or more of the following types: peptide, protein, RNA, DNA, oligosaccharide. The matrix can be chosen from one of the following types: filter paper, CM-cellulose, agar, polyacrylamide gels, or agar-polyacrylamide gels.

In the method of the present invention, the destaining reagents are electrolytes.

In one preferred embodiment, the destaining reagent comprises of phosphoric acid or soluble phosphate salts. Preferably, the concentration of phosphate ion in the fore-mentioned phosphoric acid or soluble phosphate salts is between 15 uM - 150 mM. It's preferable that the destaining reagent contains EDTA. Specifically, the destaining reagent contains 25 mM EDTA and 25 mM NaH₂PO₄.

In another preferred embodiment, the destaining reagent contains water-soluble organic acids, which can be chosen from one or more of the following: formic acid, lactic acid, acetic acid, citric acid or their soluble salts. Preferably, the concentration of lactic acid is 0.1 mM - 12 M, if the water-soluble organic acid is lactic acid, the concentration of acetic acid is 0.1 mM - 12 M, if it's acetic acid.

In the above-mentioned destaining solution, EDTA is mainly used to remove trace metal impurities in the solution. EDTA also aids the destaining, and its concentration can be adjusted by the operator based on the solution amount, reaction time, and voltage. Or, the destaining solution can contain no EDTA. The destaining solution may contain one or more of the following: phosphoric acid or soluble phosphate salts or soluble organic acid or their salts, in which concentration can be adjusted by the operator according to the voltage and reaction time. The composition of the destaining solution can be adjusted by the operator according to the voltage and reaction time. When the voltage is high enough, water or other conductive liquid can be used as the destaining solution. The solvent in the destaining solution may be water or other liquid that can form electrolyte solution.

The organic dyes typically used in the method of the present invention can be further chosen from one or more of the following: Coomassie Blue, amido black, Ponceaus S, Fast green FCF, zincon, Eriochrome black T, etc. The inorganic dyes can be further chosen from one or more of Cu²⁺, Fe²⁺, or other metal ions. The fluorescent dyes can be chosen from one or more of ethidium bromide, acridine dyes, or cyanine dyes. The composite dyes can be chosen from one or more of composition of inorganic and organic dyes, or of fluorescent and organic dyes, or of fluorescent and inorganic dyes. The gel can be chosen from one of agarose gel, polyacrylamide gel, or agar-polyacrylamide gel.

In the step *a* of the present invention, the biopolymer in the matrix is stained as the dye molecules are driven through the matrix and interact with the biopolymer by the electric field. The moving speed of dyes can be adjusted by the voltage during the staining process. Therefore, the staining time can be reduced to less than 10 minutes.

The matrix containing biopolymers after electrophoresis is securely placed between two electrodes without displacements, on which an electric field is applied with a direction different from that of electrophoresis. Although the electric field works on both the biopolymers and dyes, the moving speed of the biopolymers is much slower than that of dyes. In a short time (less than 10 minutes), the moving distance of the biopolymers is very short, and therefore negligible compared to that of the dyes. Even if the staining time is long enough for the biopolymer to move a certain distance, the dyes will already run out of the matrix to allow the biopolymer being stained, as long as the biopolymer still stay in the matrix.

In the present invention, the matrix containing biopolymers, such as polyacrylamide gels, is placed in a staining container; then the dye is pumped into the container; the staining process for biopolymers starts automatically and ends in 2-5 minutes. The dye is pumped out. Then, the destaining process for polyacrylamide gel starts automatically after a certain amount of destaining solution pumped in, and ends in 2-5 minutes. Then the destaining solution is pumped out. The whole staining process ends then the matrix containing biopolymers is taken out of the container. It's noted that the staining sensitivity can be improved by using the mixture of different dyes.

All the commonly used electrodes is suitable in the present invention, such as consumable electrodes that include but not limited to Cu; or inert metal electrodes that include but not limited to Pt, Ti; or graphite electrodes, or electrodes that have surface-coating by inert metals (which include but not limited to Pt, Ti), or stainless steel electrodes, etc.

An automatic biopolymer staining device used in the method of present invention includes one container for conducting step *a* and step *b*, and a device for transporting the staining and destaining solutions. The container has at least one outlet for the pump in/out of the staining and destaining solutions. The outlet is connected with staining/destaining solution container and waste reservior through pump and tubes.

The above-mentioned staining device also includes a power supplier and a controller.

In the present invention, as the dyes are negatively charged, the staining process in the automatic biopolymer staining method includes the following steps:
The dye and the matrix containing biopolymers are kept in contact in a container with applied electric field. The biopolymers are stained via binding of dyes to biopolymers, and the unbound dyes continue to migrate until be depleted or de-colored.

Preferably, the staining process also includes the following steps:
a, excess dyes are removed by electric field; or
b, the unbound dyes are removed completely or partially from the matrix, by adding destaining solution in the container, and then exerting an electric force.

Preferably, the negatively charged dyes are one or more of Coomassie Blue, ethidium bromide, or cyanine dyes.

An automatic biopolymer staining device in the present invention includes one container for the contact between the dyes and the matrix containing biopolymers, and a device for transporting the staining and destaining solutions. The container has at least one outlet for the pump in/out of the staining and destaining solutions. The outlet is connected with the container and waste reservoir through pumps and tubes.

Preferably, the above-mentioned staining device also includes a power supplier and a controller.

A staining kit used in the method of the present invention contains the above-claimed staining device and reagents. The staining reagents are negatively charged dyes.

The staining kit as such is not part of the present invention.

Preferably, the staining reagents are one or more of Coomassie Blue, ethidium bromide, or cyanine dyes.

Although the automatic staining device is preferred in the method of the present invention, the adding and removal of the dyes and destaining solution can be achieved by other methods, such as manually add or remove all the solutions, under which circumstance, it only needs a container with electrode by which electric field can be applied.

A staining kit used in the method of the present invention contains the above-mentioned staining device, dyes and destaining solution. The dyes are one or more of organic dyes, inorganic dyes, fluorescent dyes, or complex dyes. The organic dyes typically used in the present invention can be chosen from one or more of the following: Coomassie Blue, amido black, Ponceaus S, Fast green FCF, zincon, Eriochrome black T, etc. The inorganic dyes can be chosen from one or more of Cu²⁺, Fe²⁺, or other metal ions. The fluorescent dyes can be chosen from one or more of ethidium bromide, acridine dyes, or cyanine dyes. The composite dyes can be chosen from one or more of composition of inorganic and organic dyes, or of fluorescent and organic dyes, or of fluorescent and inorganic dyes. The destaining solution is composed of 25 mM disodium EDTA and 25 mM NaH₂PO₄.

In the present invention, the destaining solution is optional. If the destaining solution is used, there are no dyes in the destaining solution, which enable the unbound dyes to move faster out of the matrix containing biopolymers, such as polyacrylamide gels, to reduce the background. If the destaining solution is not in use, the free dyes can be removed from the matrix by extending the time under electric field.

### Benefits:

The present invention is an improved technique based on the patent application (Rapid Staining Method for Biopolymer, 201010220009.5). The rapid staining method (201010220009.5) consumes carriers, such as disposable filter paper, while the automatic staining method in the present invention does not consume the carriers, as it does not use the sandwich structure. Therefore, the cost for the present invention is low. Although, the two methods are based on the same principle that an electric field is applied to make rapid contact between the dyes and biopolymers, and then rapid separation of unbound dyes from the biopolymer-bound dyes. The present method can be accomplished automatically in a device, which includes the staining and destaining steps. The present method will avoid manual operations and direct contacts with dyes and destaining solutions, therefore improve the safety during experiments.

### In the drawing:

Figure 1 Stained SDS-PAGE gel following rapid Coomassie Blue staining procedure according to example 1 of the invention.
Figure 2 Stained SDS-PAGE gel following rapid Coomassie Blue staining procedure according to example 2 of the invention.
Figure 3 schematic illustration of an automatic staining system of the invention. 1) Storage container for destaining solution. 2) Destaining solution pump. 3) Staining container. 4) Electrodes. 5) Staining solution pump. 6) Storage container for staining solution. 7) Waste solution pump. 8) Waste solution reservoir. 9) Inlet of staining solution. 10) Inlet of destaining solution. 11) Matrix embedded with the target molecule. 12) Outlet of waste solutions.
Figure 4 ~ 8 SDS-PAGE gel stained with procedure in the present invention. The destaining solution composed of 25 mM Di-sodium EDTA and Sodium Phosphate Mono base (NaH₂PO₄) at different concentration of 15 uM, 150 uM, 1.5 mM, 15 mM and 150 mM respectively.
Figure 9 ~ 17 SDS-PAGE gel stained with procedure in the present invention. The destaining solution containing Acetic Acid at different concentration of 0.1 mM, 1.0 mM, 10 mM, 0.5 M, 2.5 M, 1.0 M, 5.0 M, 8.0 M and 12 M respectively.
Figure 18 ~ 19 SDS-PAGE gel stained with negative charged dyes with procedure of the invention without destaining procedure.

### DETAILED DESCRIPTION OF EXAMPLES

### EXAMPLE 1

Load the following 12 samples onto a 4 ~ 20% gradient PAGE gel (Genscript, MG420W12) respectively: 10 uL cell lysate (Lane1), 5 uL NEB Protein Standard (Lane2), 500 ng Mouse IgG (Lane 3), 50 ng Mouse IgG (Lane 4), 5000 ng Protein G (Lane5), 500 ng Protein G (Lane6), 50 ng Protein G (Lane7), 5000 ng BSA (Lane 8), 500 ng BSA (Lane 9), 50 ng BSA (Lane10), 5 uL NEB Protein Standard (Lane 11) and 10 uL cell lysate (Lane12). After Electrophoresing at voltage of 130 V for 1 hour, the gel was stained with following procedure.

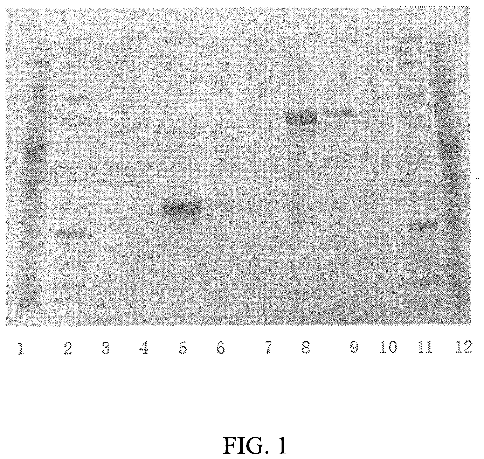

The PAGE gel containing the proteins that were already separated by electrophoresis was put into the staining container. The staining system controlled by the controller starts to work following the programmed procedure: 20 mL staining solution was pumped from the storage into the staining container. System automatically applied 36 V direct current for 5 min to stain the PAGE gel. After staining, the solution in the staining container was pumped out by the waste solution pump. 20 mL destaining solution was pumped into the staining container and direct current was applied automatically to destain the PAGE gel for 5 min. The destaining solution was pumped out by the waste solution pump. The stained PAGE gel was unloaded from the staining container and staining procedure was finished. Photos of the stained PAGE gel were taken and shown in Figure 1. Here Coomassie Blue R250 was used as staining dye. The detailed composition of staining solution is 0.05% Coomassie Blue R250, 59% deionized water, 28.5% ethanol and 12.5% (wt) lactic acid. The destaining solution is composed of 25 mM Di-sodium EDTA salt and 25 mM Sodium Phosphate mono base (NaH₂PO₄).

### EXAMPLE 2

The following 9 samples were loaded onto a 4 - 20% gradient PAGE gel (Genscript, MG420W10) respectively: 5 uL NEB Protein Standard (Lane 1), 1000 ng BSA (Lane 2), 500 ng BSA (Lane 3), 250 ng BSA (Lane 4), 125 ng BSA (Lane 5), 62.5 ng BSA (Lane 6), 31 ng BSA (Lane 7), 15 ng BSA (Lane 8) and 8 ng BSA (Lane 9). After Electrophoresing at voltage of 130 V for 1 hour, the gel was stained with following procedure.

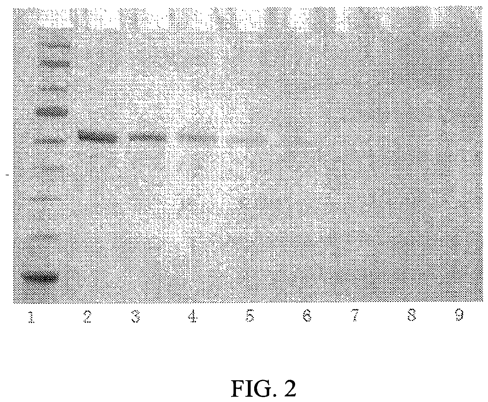

The PAGE gel containing the proteins that were already separated by electrophoresis was put into the staining container. The staining system controlled by the controller starts to work following the programmed procedure: 20 mL staining solution was pumped from the storage into the staining container. System automatically applied 36 V direct current for 5 min to staining the PAGE gel. After staining, the solution in the staining container was pumped out by the waste solution pump. 20 mL destaining solution was pumped into the staining container and direct current was applied automatically to destain the PAGE gel for 5 min. the destaining solution was pumped out by the waste solution pump. The stained PAGE gel was unloaded from the staining container and staining procedure was finished. Photos of the stained PAGE gel were taken and shown in Figure 2. Here Coomassie Blue R250 was used as staining dye. The detailed composition of staining solution is 0.05% Coomassie Blue R250, 59% deionized water, 28.5% ethanol and 12.5% (wt) lactic acid. The destaining solution is composed of 25 mM Di-sodium EDTA salt and 25 mM Sodium Phosphate mono base (NaH₂PO₄).

### EXAMPLE 3

A staining kit that includes staining device, staining solution and destaining solution is described here.

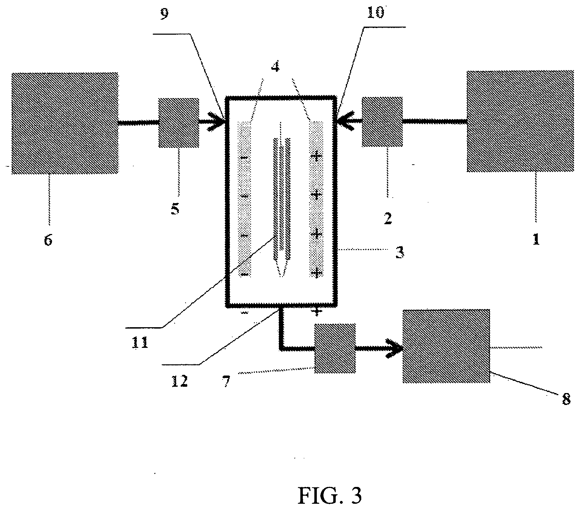

As shown in Figure 3, this staining device is configured with a container 3, which has electrode 4 inserted in. The matrix 11 containing biopolymer is placed in the container 3 for staining. Staining solution inlet 9 and destaining solution inlet 10 are located at upper wall of container 3 respectively. Inlet 9 is connected with staining solution storage 6 via pump 5, and inlet 10 is connected with destaining solution storage 1 via pump 2. Waste solution outlet 12 is located at the bottom of container 3 and connected to the waste storage 8 through pump 7. All the storages, pumps and container 3 are connected with tubes.

Staining solution is composed of 0.05% Coomassie Blue R250, 59% deionized water, 28.5% ethanol and 12.5% (wt) lactic acid.

Destaining solution is composed of 25 mM Di-sodium EDTA salt and 25 mM Sodium Phosphate mono base (NaH₂PO₄).

### EXAMPLE 4

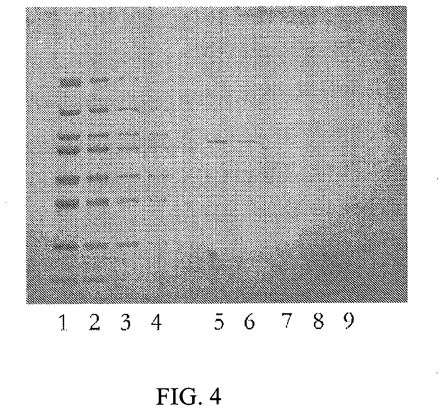

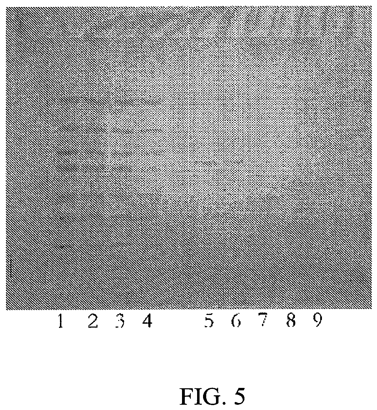

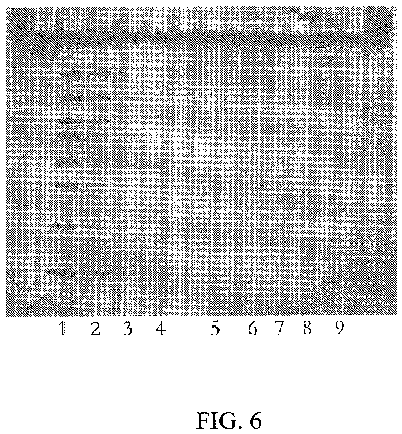

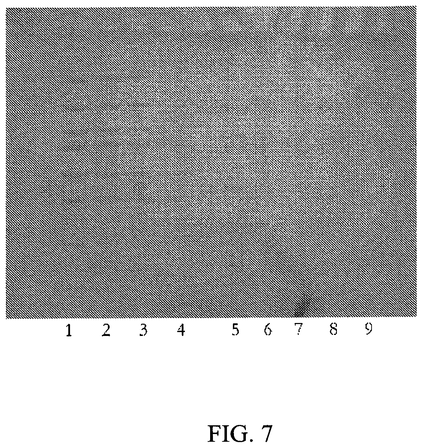

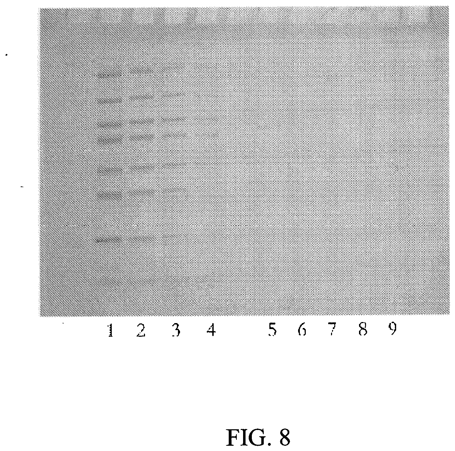

Electrophoresis samples of Lane 1 to 4 were Protein Marker (Genscript, M00516) with different loading volumes, which were 5.0 uL (Lane 1), 2.5 uL (Lane 2), 1.25 uL (Lane 3) and 0.625 uL (Lane 4) respectively. And samples of Lane 5 to 9 were BSA with different loading amount, which are 50 ng (Lane 5), 25 ng (Lane 6), 12.5 ng (Lane 7), 6.25 ng (Lane 8) and 3.125 ng (Lane 8) respectively. Electrophoresis and staining steps were followed by procedures described either in Example 1 or Example 2. Those stained gels were destained using different destaining buffer as described below.
25 mM Di-sodium EDTA salt and 15 uM Sodium Phosphate mono base (NaH₂PO₄), result showed in Figure 4
25 mM Di-sodium EDTA salt and 150 uM Sodium Phosphate mono base (NaH₂PO₄), result showed in Figure 5
25 mM Di-sodium EDTA salt and 1.5 mM Sodium Phosphate mono base (NaH₂PO₄), result showed in Figure 6
25 mM Di-sodium EDTA salt and 15 mM Sodium Phosphate mono base (NaH₂PO₄), result showed in Figure 7
25 mM Di-sodium EDTA salt and 150 M Sodium Phosphate mono base (NaH₂PO₄), result showed in Figure 8

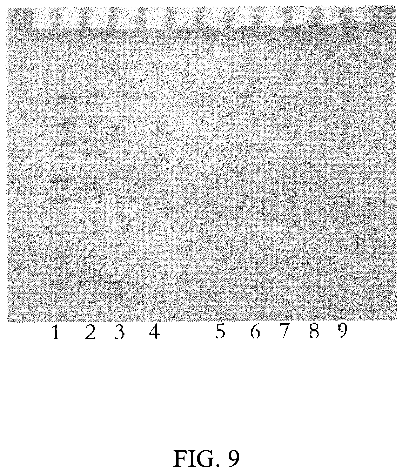

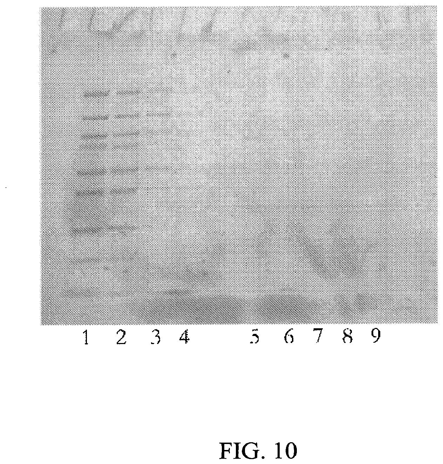

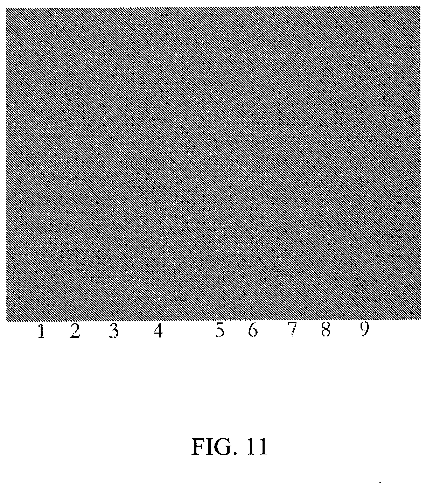

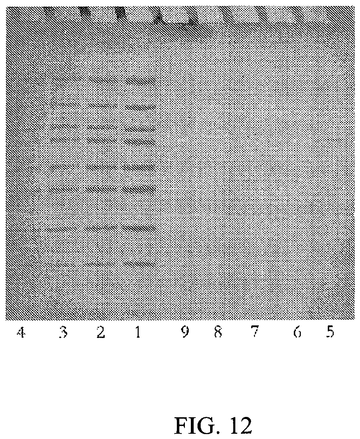

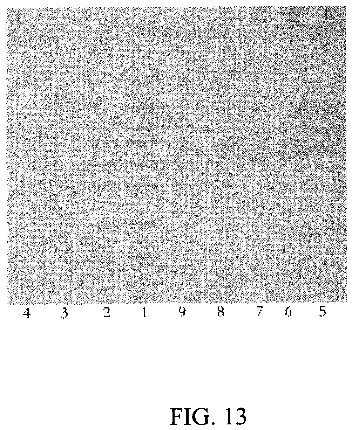

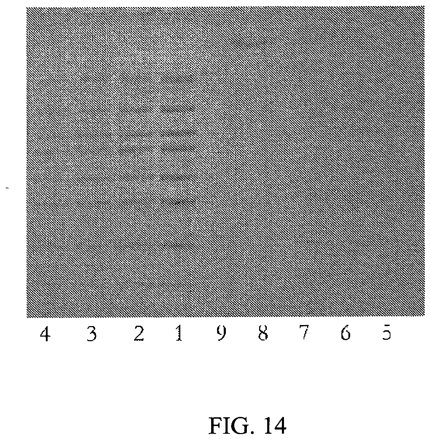

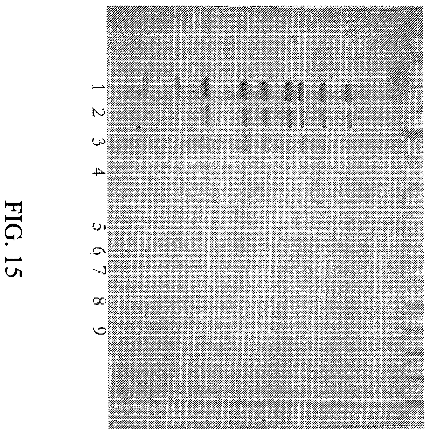

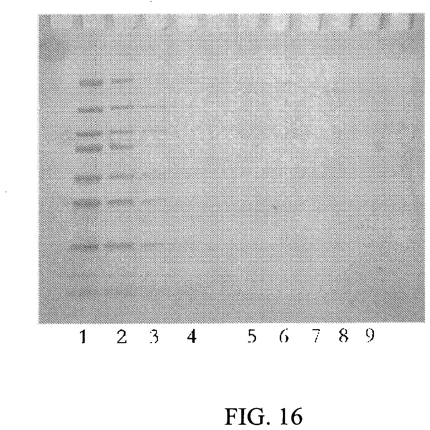

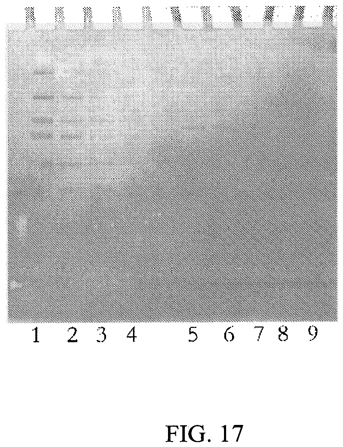

Different volumes of Protein Marker (Genscript, M00516) were loaded to Lane 1 (5.0 uL), Lane 2 (2.5 uL), Lane 3 (1.25 uL) and Lane 4 (0.625 uL), respectively. Different amounts of BSA were loaded to Lane 5 (50 ng), Lane 6 (25 ng), Lane 7 (12.5 ng), Lane 8 (6.25 ng) and Lane 9 (3.125 ng), respectively. Electrophoresis and staining steps were followed by procedures described either in Example 1 or Example 2. Those stained gels were destained using different destaining buffer as described below.
0.1 mM Acetic acid, result showed in Figure 9
1.0 mM Acetic acid, result showed in Figure 10
10 mM Acetic acid, result showed in Figure 11
0.5 M Acetic acid, result showed in Figure 12
2.5 M Acetic acid, result showed in Figure 13
1.0 M Acetic acid, result showed in Figure 14
5.0 M Acetic acid, result showed in Figure 15
8.0 M Acetic acid, result showed in Figure 16
12.0 M Acetic acid, result showed in Figure 17

### EXAMPLE 5

### 1. Preparation of cell lysate

### Protein sample 1:

*E. Coli.* cells were harvested by centrifugation. The cell pellets were re-suspended with appropriate buffer and broken by sonication. The sonicated solution was centrifuged and the supernatant was collected for electrophoresis assay. The concentration of the protein was adjusted to about 0.4mg/mL with 0.5mM Tris buffer. Then the protein solution was mixed with 5X Protein Loading buffer at a ratio of 4:1 and heated for 10min in water bath or solid metal bath at 100° C.

5X Protein Loading Buffer (5 mL):
250mM Tris-HCl (pH 6.8)
10% (w/v) SDS
0.5% (w/v) BPB
50% (v/v) Glycerol
5% (w/v) β-mercaptoethanol

Protein sample 2:
Different volumes of Protein Marker (Genscript, M00516) were loaded to Lane 1 (5.0 uL), Lane 2 (2.5 uL), Lane 3 (1.25 uL) and Lane 4 (0.625 uL), respectively. Different amounts of BSA were loaded to Lane 5 (50 ng), Lane 6 (25 ng), Lane 7 (12.5 ng), Lane 8 (6.25 ng) and Lane 9 (3.125 ng), respectively.

### 2. Electrophoresis

Electrophoreses at 140 V for 45 min.

### 3. Staining

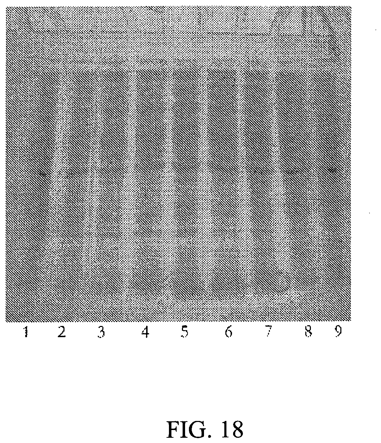

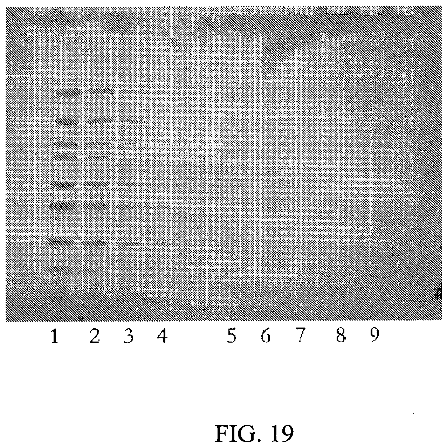

Staining solution (0.05% Coomassie Blue R250, 59% deionized water, 28.5% ethanol and 12.5% (wt) lactic acid.) was pumped into staining container. The gels were stained at 24 V for 10 min and no further destaining step was applied. The staining results were shown in Figure 18 and Figure 19 respectively.

As results shown, for negative charged dye such as Coomassie Blue, prolonging the staining time up to 10 min could remove excessive dye as those un-bounded dye molecules could be moved to the positive electrode and oxidized under electronic force, by which the gel could be destained without any destaining solution.

The innovation in staining process is not limited to the choices of dyes and destaining reagents, and the staining time could be adjusted from 5 min to 15 min for optimized result. The examples described above were just illustration of the invention, which will not interfere with the scope of patent protection.

## Claims

1. A method of staining a target biopolymer in an electrophoretic matrix, the method comprising:
(a) providing a device containing
(i) a container for receiving the electrophoretic matrix embedded with a target biopolymer,
(ii) one or more pumps configured to pump a staining solution containing a staining reagent into and out of the container and optionally a destaining solution into and out of the container, and
(iii) a pair of electrodes provided inside the container for applying an electric field;
(b) inserting the electrophoretic matrix embedded with a target biopolymer into the container of the device, and placing the electrophoretic matrix between said pair of electrodes;
(c) pumping the staining solution comprising a staining reagent into the container;
(d) applying an electric field to the electrophoretic matrix by said pair of electrodes, wherein the direction of the electric field relative to the electrophoretic matrix is different from the direction of the electric field that was used for embedding the target biopolymer in the electrophoretic matrix by electrophoresis, and wherein the electric force applied is sufficient to move the staining reagent from the staining solution into the electrophoretic matrix embedded with the target biopolymer, thereby staining the target biopolymer, and to move unbound staining reagent out of the electrophoretic matrix, thereby destaining the electrophoretic matrix;
(e) pumping the staining solution out of the container; and
(f) optionally pumping destaining solution into and out of the container.

2. The method according to claim 1, wherein the device further comprises a waste collection unit to be connected to the container for receiving the staining solution and optional destaining solution that is pumped out of the container.

3. The method according to claim 1 or 2, wherein the matrix is selected from the group consisting of an agarose gel, a polyacrylamide gel, and a mixture of agarose and polyacrylamide.

4. The method according to any one of the preceding claims, wherein the target biopolymer is selected from the group consisting of a peptide, a protein, RNA, a DNA, and a low molecular weight glycan.

5. The method according to any one of the preceding claims, wherein the staining reagent is selected from the group consisting of an organic reagent, inorganic reagent, a dye or a dye-labeled reagent, a fluorescent dye, and a composite dye.

6. The method according to claim 5, wherein the organic reagent is Coomassie Blue, amino black, Ponceau, fast green FCF, zinc, chrome black, or a mixture thereof; the inorganic reagent is copper ion, ferrous ion, other heavy metal ions, or a mixture thereof; the fluorescent dye is Ethidium bromide, acridine dyes, cyanine dye, or a mixture thereof; and the composite dye is organic/inorganic composite, fluorescent/organic composite, fluorescent/inorganic composite, or a mixture thereof.

7. The method according to any one of the preceding claims, said device being an automated system further comprising a power supply and a controller.

8. The method according to any one of the preceding claims, wherein the optional destaining solution comprises EDTA and phosphate acid or soluble phosphate salts.

9. The method according to claim 8, wherein the destaining solution comprises 25 mM EDTA and 25 mM sodium phosphate (NaH₂PO₄).

## Patentansprüche

1. Verfahren zum Färben eines Ziel-Biopolymers in einer Elektrophoresematrix, wobei das Verfahren umfasst:
(a) Bereitstellen einer Vorrichtung, die enthält:
(i) einen Behälter zum Aufnehmen der Elektrophoresematrix, in die ein Ziel-Biopolymer eingebettet ist,
(ii) eine oder mehrere Pumpen, die dafür gestaltet sind, eine Färbungslösung, die ein Färbungsreagens enthält, in den und aus dem Behälter und gegebenenfalls eine Entfärbungslösung in den und aus dem Behälter zu pumpen, und
(iii) ein Paar von Elektroden, die im Inneren des Behälters bereitgestellt sind, zum Anlegen eines elektrischen Felds;
(b) Einführen der Elektrophoresematrix, in die ein Ziel-Biopolymer eingebettet ist, in den Behälter der Vorrichtung, und Platzieren der Elektrophoresematrix zwischen das Paar von Elektroden;
(c) Pumpen der Färbungslösung, die ein Färbungsreagens enthält, in den Behälter,
(d) Anlegen eines elektrischen Felds an die Elektrophoresematrix durch das Paar von Elektroden, wobei die Richtung des elektrischen Felds relativ zu der Elektrophoresematrix von der Richtung des elektrischen Felds, das zum Einbetten des Ziel-Biopolymers in die Elektrophoresematrix durch Elektrophorese verwendet worden ist, verschieden ist, und wobei die angelegte elektrische Kraft ausreicht, um das Färbungsreagens aus der Färbungslösung in die Elektrophoresematrix, in die das Ziel-Biopolymer eingebettet ist, zu bewegen, um das Ziel-Biopolymer zu färben, und um nichtgebundenes Färbungsreagens aus der Elektrophoresematrix hinaus zu bewegen, um die Elektrophoresematrix zu entfärben;
(e) Pumpen der Färbungslösung aus dem Behälter; und
(f) gegebenenfalls Pumpen von Entfärbungslösung in den und aus dem Behälter.

2. Verfahren gemäß Anspruch 1, wobei die Vorrichtung ferner eine Abfallsammeleinheit umfasst, die mit dem Behälter zum Aufnehmen der Färbungslösung und der optionalen Entfärbungslösung, die aus dem Behälter gepumpt wird, zu verbinden ist.

3. Verfahren gemäß Anspruch 1 oder 2, wobei die Matrix ausgewählt ist aus der Gruppe bestehend aus einem Agarose-Gel, einem Polyacrylamid-Gel und einem Gemisch von Agarose und Polyacrylamid.

4. Verfahren gemäß einem der vorstehenden Ansprüche, wobei das Ziel-Biopolymer ausgewählt ist aus der Gruppe bestehend aus einem Peptid, einem Protein, RNA, einer DNA und einem Glycan mit niedrigem Molekulargewicht.

5. Verfahren gemäß einem der vorstehenden Ansprüche, wobei das Färbungsreagens ausgewählt ist aus der Gruppe bestehend aus einem organischen Reagens, anorganischen Reagens, einem Farbstoff oder einem farbstoffmarkierten Reagens, einem Fluoreszenzfarbstoff und einem Verbundfarbstoff.

6. Verfahren gemäß Anspruch 5, wobei das organische Reagens Coomassie-Blau, Amidoschwarz, Ponceau, Echtgrün-FCF, Zink, Chromschwarz oder ein Gemisch davon ist; das anorganische Reagens Kupferion, Eisen(II)-Ion, andere Schwermetallionen oder ein Gemisch davon ist; der Fluoreszenzfarbstoff Ethidiumbromid, Acridinfarbstoffe, Cyaninfarbstoff oder ein Gemisch davon ist; und der Verbundfarbstoff organischer/anorganischer Verbundstoff, fluoreszierender/organischer Verbundstoff, fluoreszierender/anorganischer Verbundstoff oder ein Gemisch davon ist.

7. Verfahren gemäß einem der vorstehenden Ansprüche, wobei die Vorrichtung ein automatisiertes System ist, das ferner eine Stromversorgung und eine Steuerung umfasst.

8. Verfahren gemäß einem der vorstehenden Ansprüche, wobei die optionale Entfärbungslösung EDTA und Phosphatsäure oder lösliche Phosphatsalze umfasst.

9. Verfahren gemäß Anspruch 8, wobei die Entfärbungslösung 25 mM EDTA und 25 mM Natriumphosphat (NaH₂PO₄) umfasst.

## Revendications

1. Procédé de coloration d'un biopolymère cible dans une matrice électrophorétique, le procédé comprenant :
(a) l'obtention d'un dispositif contenant
(i) un récipient destiné à recevoir la matrice électrophorétique dans laquelle est incorporé un biopolymère cible,
(ii) une ou plusieurs pompes configurées pour pomper une solution de coloration contenant un réactif de coloration jusqu'à l'intérieur et hors du récipient et éventuellement une solution de décoloration jusqu'à l'intérieur et hors du récipient, et
(iii) une paire d'électrodes disposées à l'intérieur du récipient pour appliquer un champ électrique ;
(b) l'insertion de la matrice électrophorétique dans laquelle est incorporé un biopolymère cible dans le récipient du dispositif, et le positionnement de la matrice électrophorétique entre ladite paire d'électrodes ;
(c) le pompage de la solution de coloration comprenant un réactif de coloration jusqu'à l'intérieur du récipient ;
(d) l'application d'un champ électrique à la matrice électrophorétique par ladite paire d'électrodes, la direction du champ électrique par rapport à la matrice électrophorétique étant différente de la direction du champ électrique qui a été utilisé pour incorporer le biopolymère cible dans la matrice électrophorétique par électrophorèse, et la force électrique appliquée étant suffisante pour déplacer le réactif de coloration depuis la solution de coloration jusqu'à l'intérieur de la matrice électrophorétique dans laquelle est incorporé le biopolymère cible, colorant ainsi le biopolymère cible, et pour déplacer le réactif de coloration non lié hors de la matrice électrophorétique, décolorant ainsi la matrice électrophorétique ;
(e) le pompage de la solution de coloration hors du récipient ; et
(f) éventuellement, le pompage de la solution de décoloration jusqu'à l'intérieur et hors du récipient.

2. Procédé selon la revendication 1, dans lequel le dispositif comprend en outre une unité de collecte de déchets devant être raccordée au récipient pour recevoir la solution de coloration et la solution de décoloration facultative qui est pompée hors du récipient.

3. Procédé selon la revendication 1 ou 2, dans lequel la matrice est choisie dans le groupe constitué par un gel d'agarose, un gel de polyacrylamide, et un mélange d'agarose et de polyacrylamide.

4. Procédé selon l'une quelconque des revendications précédentes, dans lequel le biopolymère cible est choisi dans le groupe constitué par un peptide, une protéine, de l'ARN, un ADN, et un glycane de bas poids moléculaire.

5. Procédé selon l'une quelconque des revendications précédentes, dans lequel le réactif de coloration est choisi dans le groupe constitué par un réactif organique, un réactif inorganique, un colorant ou un réactif marqué par colorant, un colorant fluorescent, et un colorant composite.

6. Procédé selon la revendication 5, dans lequel le réactif organique est le bleu de Coomassie, le noir amido, le Ponceau, le vert rapide FCF, le zinc, le noir de chrome, ou un mélange de ceux-ci ; le réactif inorganique est l'ion cuivre, l'ion ferreux, d'autres ions de métaux lourds, ou un mélange de ceux-ci ; le colorant fluorescent est le bromure d'éthidium, les colorants à base d'acridine, un colorant à base de cyanine, ou un mélange de ceux-ci ; et le colorant composite est un composite organique/inorganique, un composite fluorescent/organique, un composite fluorescent/inorganique, ou un mélange de ceux-ci.

7. Procédé selon l'une quelconque des revendications précédentes, ledit dispositif étant un système automatisé comprenant en outre une alimentation électrique et un contrôleur.

8. Procédé selon l'une quelconque des revendications précédentes, dans lequel la solution de décoloration facultative comprend de l'EDTA et l'acide phosphorique ou des sels de phosphate solubles.

9. Procédé selon la revendication 8, dans lequel la solution de décoloration comprend de l'EDTA 25 mM et du phosphate de sodium (NaH₂PO₄) 25 mM.
